# EUROPÄISCHE PATENTSCHRIFT

(11) **EP 0 805 282 B1**
(45) Veröffentlichungstag und Bekanntmachung des Hinweises auf die Patenterteilung: **03.12.2003**
(21) Anmeldenummer: 97201248.8
(22) Anmeldetag: 29.04.1997
(51) Int. Cl.: F16B 13/14

(54) **Verfahren zur Verankerung eines Ankerkörpers und Einspritzankersystem zur Anwendung dieses Verfahrens**
Anchoring method for an anchoring device and injection system for such method
Méthode pour l'ancrage d'un corps d'ancrage et système d'injection correspondant

(30) Priorität: 01.05.1996 NL 1002974
(43) Veröffentlichungstag der Anmeldung: 05.11.1997
(73) Patentinhaber: Berenman, Hubert Jan, 4760 AD Zevenbergen (NL)
(72) Erfinder: Berenman, Hubert Jan, 4760 AD Zevenbergen (NL)
(74) Vertreter: Timmers, Cornelis Herman Johannes

(56) Entgegenhaltungen:
- EP-A- 0 384 327
- DE-A- 2 550 294
- FR-A- 2 223 587
- GB-A- 2 204 905
- GB-A- 2 262 147

## Beschreibung

Die Erfindung bezieht sich auf ein Einspritzankersystem, mit einem in einem Verankerungsloch zu verankernen länglichen

Ankerkörper mit einem darin verlaufenden Einspritzkanal für aushärtendes Material und mit einer Abdichtung rund um den Ankerkörper zur Zusammenarbeit mit der Lochwand.

Obenerwähntes Ankersystem ist aus der Fr-A-2223587 bekannt.

Diese Publikation beschreibt ein Einspritzankersystem, wobei im länglichen Ankerkörper ein in Längsrichtung verlaufender Kanal gebildet ist, der als Zufuhr des aushärtenden Verankerungsmaterials dient; am Anfang dieses Kanals ist ein Rückschlagventil angebracht. Über diesem Kanal kann der Raum um den Ankerkörper mit dem am Ende des Körpers austretenden, aushärtenden Material ausgefüllt werden.

Da der Raum rund um den Ankerkörper und der Kanal am Anfang ganz mit Luft gefüllt war und dieser Raum durch Abdichtungsrippen effektiv von der Aussenluft abgeschloßen ist, ist es unvermeidbar, daß nach dem Füllen eine erhebliche Menge Luft, die sich mit dem aushärtenden Material mischt, und die Qualität ungünstig beeinflußt, zurückbleibt.

Die Erfindung bezweckt, diesem Nachteil auszuräumen und realisiert dies mit den Maßnahmen gemäß dem Kennzeichen des Anspruchs 1. Man führt damit das Füllen aus über dem am Ende des Kanals angebrachten Rückschlagventil und entlüftet dabei den auszufüllenden Raum über die abzuschließende Entlüftung, die man nach dem Ausfüllen des Raumes abschließt, so daß das Material unter Überdruck in dem abgeschlossenen Raum aushärtet.

Da das aushärtende Material den Raum um den Ankerkörper während des Aushärtens durch das Abführen der Luft unter Überdruck steht, wird nicht nur den Schrumpf des Materials kompensiert, sondern wird außerdem, wie sich in Versuchen erwiesen hat,der Raum zwischen dem Ankerkörper und der Lochwand vollständig und zuverlässig mit Material ausgefüllt . Die Verankerung ist dadurch zuverlässiger und stabiler, und der Anker kann wesentlich höheren Belastungen ausgesetzt werden.

Bevorzugte Ausführungen des Ankers sind in den Ansprüchen 2-6 beschrieben.

Die GB -A- 2 262 147 beschreibt ein System für das gegeneinander zusammenziehen von Felsgruppen, wobei in einem in den Felsgruppen geformtes Bohrloch ein Spreizkopf und ein mittels einer zugfesten Kabellitze damit verbundenes, das Bohrloch abschließendes Endstück angeordnet sind. Spreizkopf und Endstück sind miteinander über einem Füllkanal verbunden, und über diesem Kanal und einem in dem Spreizkopf montierten Rückschlagventil wird aushärtendes zweikomponenten Kunstharz in dem Raum um die Kabellitze eingebracht. Der ausgehärtete Kunststoff überbrückt die Felsgruppen und sorgt für die dazwischen notwendige Kohäsion, Im Endstück gibt es kein Entlüftungsrohr während diese Veröffentlichung keinen Hinweis gibt, das Ganze als tragenden Anker zu verwenden.

Die GB -A- 2 204 905 beschreibt ein System zur Unterstützung plattenförmiger Fassadenbekleidungselemente, zu montieren in einem in den Elementen und den Unterboden ausgebohrten Bohrloch.

Das System enthält einen mit einem Entluftungskanal versehenen, den in der Fassadenbekleidung geformten Öffnung abschließenden aushärtenden Absperrpfrophen, durch den ein einfaches, nicht mit einem Rückschlagventil versehenen Füllrohr gesteckt wurde über das die geformte Bohrung mit aushärtendem Kunststoff gefüllt werden kann. Dieser Kunststoff wird also nicht unter Überdruck aushärten.

Die Erfindung wird anhand der folgenden Zeichnung näher erläutert:
- Fig.1: schematisch die Hauptteile des Ankersystems gemäß der Erfindung;
- Fig.2: einen Längsaxialschnitt durch eine praktische Ausführung gemäß der Erfindung.
- Fig.3: teilweise im Längsaxialschnitt und teilweise im Querschnitt, ein Werkzeug, das gebraucht wird beim Montieren des Einspritzsystems nach Fig.2.

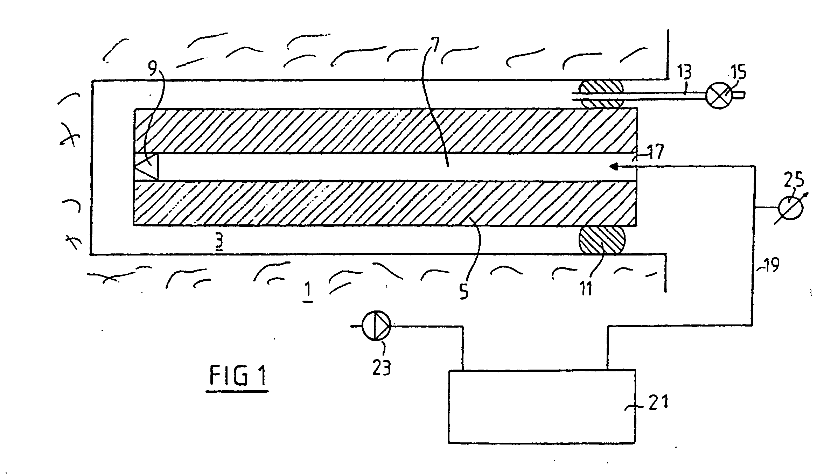

In Fig. 1 wird mit 1 ein Gestein bezeichnet mit einem darin ausgebohrten Loch 3. In diesem Loch 3 ist das erfindungsgemäße Anker 5 zu verankern. Dieser Anker 5 ist mit einem in Längsrichtung verlaufenden Füllkanal 7 versehen, mit darin einem schematisch angedeuteten Rückschlagventil 9. Mittels einer rund um den Anker 5 montierten Abdichtung 11 ist das rechte Ende des Ankers 9 gegen die Lochwand 3 abgedichtet; durch die Abdichtung 11 ist ein Entlüftungskanal 13 geführt, der mit einem schematisch angedeuteten Verschluß 15 abgeschlossen werden kann.

Die Einfüllöffnung 17 des Kanals 7 ist über eine Zuführleitung 19 an einen Behälter 21 angeschlossen, der mit dem um den Anker 5 anzubringenden aushärtenden Material gefüllt ist. Mit einem Kompressor 23 wird der Behälter 21 unter Druck gehalten; ein Manometer 25 ermöglicht es, den manometrischen Druck in der Leitung 19 zu überwachen.
Das Ganze wird wie folgt

Nach dem Bohren des Loches 3 wird darin der Anker 5 mit der Abdichtung 11 angebracht, und wird an die Einfüllöffnung 17 die Zuführleitung 19 angeschlossen. Das um den Anker 5 im Loch 3 anzubringende aushärtende Material wird durch den im Anker 5 verlaufenden Füllkanal 7 und das Rückschlagventil 9 eingebracht; während des Ausfüllens des Raumes zwischen dem Anker 5 und der Lochwand 3 strömt die noch anwesende Luft durch die Entlüftungsleitung 13 und den geöffneten Verschluß 15 aus.

Wenn das Ausfüllen vollendet ist - was man dadurch bemerkt, daß aus dem Luftschlauch 13 das aushärtende Material austritt - wird der Verschluß 15 geschlossen. Dadurch wird das zwischen dem Anker 5 und der Lochwand anwesende Material unter einen bestimmten Überdruck gebracht, der zum Beispiel 2-3 Bar betragen kann; der Überdruck wird mit dem Manometer 25 überwacht. Dann stoppt man die Zufuhr von Material an der Einfüllöffnung 17, aber wegen der Anwesenheit des Rückschlagventils 9 bleibt ein bestimmter Überdruck im Füllmaterial aufrechterhalten, so daß es unter Überdruck aushärtet - mit allen obengenannten Vorteilen.

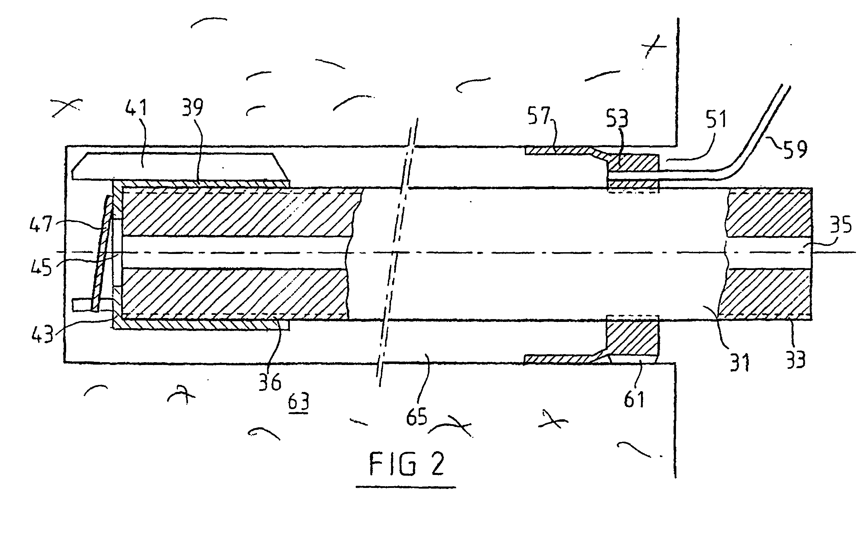

Eine praktische Ausgestaltung des erfindungsgemäßen Einspritzankers wird im Längsaxialschnitt in Figur 2 gezeigt.

In den in Fig. 2-4 dargestellten Ausführung ist der Anker stabförmig, hat über die gesamte Länge ein Außengewinde 33 und ist mit einer zentralen Innenbohrung 35 versehen. Am linken Ende ist eine mit einem Innengewinde 36 versehene Verschlußkappe 37 geschraubt. Die Kappe 37 besteht aus einem zylindrischen Kappenkörper 39 mit einigen, zum Beispiel drei, über den Umfang verteilten, radialen Rippen 41; in ihrer Stirnseite 43 ist eine zentrale Öffnung 45 angebracht, auf deren Vorderseite eine Schließlippe 47 montiert ist.Die Kombination von Durchlaßöffnung 45 und Schließlippe 47 bildet ein einfaches, jedoch effektives Rückschlagventil.

Am anderen Ende trägt der Anker 33 eine spezielle Abdichtung mit Entlüftungskanal, die insgesamt mit 51 angedeutet ist. Diese Abdichtung 51 umfasst einen zylindrischen hülsenförmigen Körper 53 mit Innengewinde 55, dessen linkes Ende sich in eine elastische, elastisch nach außen abstehende Dichtungshülse 57 fortsetzt. Durch den Ring 53 führt ein elastischer Entlüftungsschlauch 59.

Auch der Ring 53 trägt radiale Stützrippen, die mit 61 angedeutet sind.

Der umschriebene Kreis der Stützrippen 41 ähnelt im Wesentlichen die der Stützrippen 61 und ist etwas kleiner als den Innendurchmesser des Loches, das in das Gestein gebohrt ist.

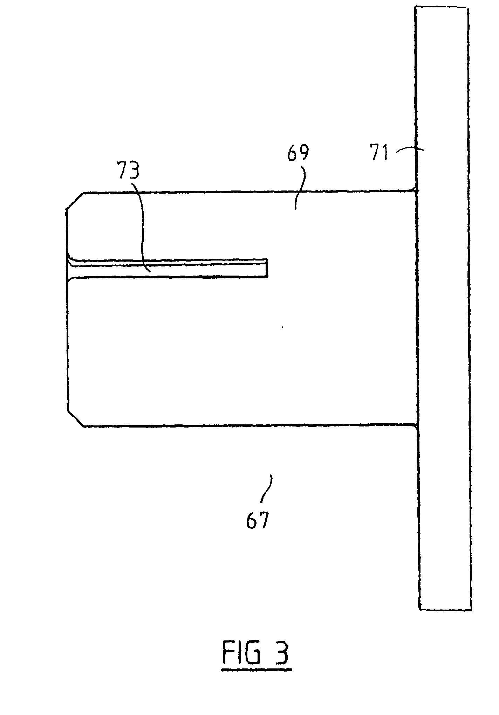

In Fig 2 ist dieses Gestein mit 63 angedeutet, und das gebohrte Loch mit 65. Auf den Ankerkörper 31 sind die Kappe 37 und die Abdichtung 51 geschraubt. Für letzteres wird ein spezielles, in Fig. 3 gezeigtes Werkzeug benutzt, das aus einer zylindrischen Hülse 67 mit daran dem Stellgriff 69 besteht; der Mantel der Hülse 67 hat drei Schlitzlöcher 73, die für die Aufnahme der radialen Rippen 61 bestimmt sind.

Zur Anbringung der Abdichtung 51 am Anker 31 wird das Werkzeug 67 soweit über den Ring 53 geschoben, bis die elastische, sich allmählich ausweitende Dichthülse 57 radial ganz zusammengedrückt ist; die Rippen 61 liegen dann in den Längsschlitzen 73. In dieser Stellung kann die Abdichtung 51 auf den Anker 31 geschraubt werden, bis die Abdichtung 51 die in der Fig.2 gezeichneten Stellung erreicht hat. Wenn das Ganze in der Bohrung geschlossen ist, wird das Werkzeug 67 nach rechts weggezogen und es entsteht die in Fig.2 gezeichnete Stand.

Während des Ausfüllens über den Kanal 35 tritt das Material am linken Ende des Ankers 31 durch die Öffnung 45 aus und füllt den Raum zwischen der Lochwand und dem Anker 31 vollständig aus; die Luft strömt durch den Entlüftungsschlauch 59 aus. Sobald man sieht daß das Material aus dem kleinen Schlauch 59 tritt, wird der kleine Schlauch abgeschlossen, zum Beispiel indem man ihn zusammenfaltet und abbindet. Durch den Überdruck unter dem das Füllmaterial zugeführt wird, wird der Raum zwischen der Lochwand und dem Anker vollständig mit aushärtendem Material ausgefüllt; wenn man das Füllen beendet, preßt sich auf Grund des Überdrucks im Material die Scheibe 47 gegen die Ränder der Öffnung 45, und es kann kein Füllmaterial mehr durch die Bohrung 35 entweichen und das Füllmaterial härtet also unter Überdruck aus.

Das Verfahren gemäß der Erfindung gewährleistet, daß im aushärtenden Material keine Luft mehr vorhanden ist, so daß rund um den Anker eine vollkommen homogene Masse gebildet wird, die alle Räume und Höhlen ausfüllt. Auf diese Weise wird eine ausgezeichnete Verankerung erzielt.

Die Endkappe 37 und die Abdichtung 51 werden vorzugsweise im Druckguß aus Kunststoff hergestellt, der die rationelle Produktion in großen Stückzahlen unterschiedlicher und an die jeweiligen Durchmesser der gebrauchten Anker angepaßter Aufmaße, ermöglicht. Der Ankerkörper selbst kann billig in jeder gewünschten Länge hergestellt werden.

## Patentansprüche

1. Einspritzankersystem, mit einem in einem Verankerungsloch zu verankernden länglichen Ankerkörper mit einem darin verlaufenden Einspritzkanal für aushärtendes Material und mit einer Abdichtung rund um den Ankerkörper zur Zusammenarbeit mit der Lochwand **gekennzeichnet, durch** ein am Ende des Einspritzkanals angeordnetes Rückschlagventil und **durch** einen **durch** die Abdichtung verlaufenden abschließbaren Entlüftungskanal.

2. Einspritzankersystem nach Anspruch 1, **dadurch gekennzeichnet, daß** das Rückschlagventil durch eine nachgiebige Lippe gebildet wird, die zur Stelle der Mündung des Einspritzkanals an die mit einer Durchlaßöffnung versehenen Stirnseite einer am Einspritzkanalende des Ankerkörpers montierten Kappe angebracht ist.

3. Einspritzankersystem nach Anspruch 2, **dadurch gekennzeichnet, daß** die Abdichtung aus einem den Ankerkörper umschließenden Ring besteht, der eine elastische kegelmantelförmige Dichtungshülse trägt.

4. Einspritzankersystem nach Anspruch 3, **dadurch gekennzeichnet, daß** die Kappe und der Ring mit am Außenumfang radial ausstechenden Stützrippen versehen sind.

5. Einspritzankersystem nach Anspruch 4, **dadurch gekennzeichnet, daß** der Entlüftungskanal aus einem durch den Ring geführten, nahe der Basis der Dichtungshülse mündenden Schlauch besteht.

6. Einspritzankersystem nach den Ansprüchen 2-5, **dadurch gekennzeichnet, daß** der Ankerkörper mit einem Außengewinde ausgestattet ist, und die Kappe und der Ring mit dementsprechendem Innengewinde versehen sind.

## Claims

1. An injection anchor system, with an elongate anchor body for anchoring in an anchoring hole and having an injection duct extending therein for hardening material and with a seal around the anchor body for co-operation with the hole wall, **characterised by** a non-return valve disposed at the end of the injection duct and by a closable venting duct extending through the seal.

2. An injection anchor system according to claim 1, **characterised in that** the non-return valve is formed by a resilient lip which at the orifice of the injection duct is disposed at the end face of a cap mounted at the injection duct end of the anchor body, said end face being provided with a passage opening.

3. An injection anchor system according to claim 2, **characterised in that** the seal consists of a ring enclosing the anchor body and carrying an elastic sealing sleeve having the shape of an envelope of a cone.

4. An injection anchor system according to claim 3, **characterised in that** the cap and the ring are provided with support ribs projecting radially at the outer periphery.

5. An injection anchor system according to claim 4, **characterised in that** the venting duct consists of a hose passed through the ring and discharging near the base of the seal sleeve.

6. An injection anchor system according to claims 2 to 5, **characterised in that** the anchor body is provided with an external screwthread and the cap and the ring are provided with a corresponding internal screwthread.

## Revendications

1. Système d'ancrage à injection avec un orifice d'ancrage pour des corps d'ancrage longitudinaux à ancrer, avec un canal d'injection s'étendant en longueur à l'intérieur pour un matériau qui se durcit et avec un joint d'étanchéité tout autour du corps d'ancrage pour une coopération avec la paroi de l'orifice, **caractérisé par** une soupape de retenue disposée à l'extrémité du canal d'injection et par un canal d'aération obturable traversant le joint d'étanchéité.

2. Système d'ancrage à injection selon la revendication 1, **caractérisé en ce que** la soupape de retenue est formée par une lèvre souple qui est montée à l'emplacement de l'embouchure du canal d'injection sur la face frontale munie d'une ouverture de passage, d'un capuchon monté sur l'extrémité du canal d'injection du corps d'ancrage.

3. Système d'ancrage à injection selon la revendication 2, **caractérisé en ce que** le joint d'étanchéité est composé d'un anneau entourant le corps d'ancrage, lequel anneau porte une bague d'étanchéité en forme de cône.

4. Système d'ancrage à injection selon la revendication 3, **caractérisé en ce que** le capuchon et l'anneau sont munis de nervures de support dépassant radialement au niveau de la circonférence extérieure.

5. Système d'ancrage à injection selon la revendication 4, **caractérisé en ce que** le canal d'aération est composé d'un tuyau amené à travers l'anneau et débouchant près de la base de la bague d'étanchéité.

6. Système d'ancrage à injection selon les revendications 2 à 5, **caractérisé en ce que** le corps d'ancrage est équipé d'un filetage extérieur, et **en ce que** le capuchon et l'anneau sont munis de filetages intérieurs lui correspondant.
